# EUROPEAN PATENT APPLICATION

(11) **EP 4 566 452 A1**
(43) Date of publication of application: **11.06.2025**
(21) Application number: 24383272.2
(22) Date of filing: 25.11.2024
(51) Int. Cl.: A22B 7/00, F25D 19/00

(54) **SYSTEM FOR STORAGE, PRESERVATION AND TRANSPORT OF ANIMAL BY-PRODUCTS**

(30) Priority: 05.12.2023 ES 202332165 U
(71) Applicant: Sistemas de Almacenamiento de Cadáveres en Explotación, S.L., 47001 Valladolid (ES); Secanim Bio-Industries, S.A.U., 08403 Granollers (Barcelona) (ES)
(72) Inventor: González Arenal, Carlos, Valladolid (ES); Vila Fortuny, Miquel, Valladolid (ES); Abad Centelles, Alfredo, Valladolid (ES)
(74) Representative: Pons

(57) **Abstract**

The present invention refers to a system for storage, conservation and transport of animal by-products and organic waste generated in livestock farms, meat industries and SANDACH production centres, comprising cooling means (11) configured to refrigerate the animal by-products stored in a container (1), which allows regulated refrigeration and optionally, insulation to preserve the interior material intact and to slow down degradation. In this way, the health and hygiene of the livestock farm where the system is installed is preserved and unpleasant odours and unwanted insects are avoided, maximising biosecurity and minimising environmental pollution caused by these types of by-products.

## Description

### OBJECT OF THE INVENTION

The present invention relates to a system for storage, preservation and transport of animal by-products and organic waste generated at livestock farms, meat industries and centres for producing animal by-products not intended for human consumption (SANDACH), said system comprising cooling means configured to cool the animal by-products stored in a container, which allows regulated cooling and, optionally, insulation to keep the inner material intact and to slow down degradation. This thus preserves the health and hygiene of the livestock farm where the system is installed and avoids unpleasant odours and unwanted insects, maximising biosafety and minimising environmental pollution caused by these types of by-products.

Moreover, the system comprises means for the removal process from the system, maximising biosafety by reducing the frequency of collection as it is a large storage capacity system. By reducing the frequency of collection, greenhouse gas emissions from transport are reduced. The subsequent treatment and processing of the by-product promotes the circular economy.

Moreover, the cooling means can be detachable from the container, allowing them to be removed when the system has to be moved for the subsequent emptying, treatment and use of animal by-products and organic waste, thus promoting the circular economy.

### BACKGROUND OF THE INVENTION

In the field of tanks for the storage and preservation of animal by-products, tanks are known that are raised above the ground and have opening and closing means and lifting, turning and dumping means for the tank.

This includes Spanish patent with publication number ES2378032B2, wherein the opening and closing means for opening and closing the tank comprise a lid or cover that covers the access to the tank at the top thereof, and which is divided into two main parts separated by a hinge: a first movable lid or cover and a second fixed lid or cover, wherein said first and second lids are dimensionally unequal.

In turn, the tank comprises controlling means for controlling the opening and closing of the lid or cover, said means formed by a structure comprising a set of coupled bars, a first vertical bar, a set of support bars suitably fixed to the top portion of the tank, a pulley located at the free end of the first bar and a cable that runs through a groove in the pulley and has two ends, a first end attached to the first lid and a second end that is free or attached to drive means for pulling the cable.

Utility model ES1231219U is also known, which discloses a tank, raised above the ground, which comprises a container comprising a perimeter wall arranged between a bottom wall and a top lid, defining an inner space where animal by-products are stored, wherein said lid comprises a movable part and a fixed part, wherein the movable part is hinged to the fixed part by means of hinges.

Nevertheless, none of the foregoing tanks guarantees keeping the inner material intact by slowing down degradation in order to preserve the health and hygiene of the livestock farm where the container is located.

The system for storage, preservation and transport of animal by-products and organic waste of the present invention solves all the foregoing drawbacks.

### DESCRIPTION OF THE INVENTION

The present invention relates to a system for storage, preservation and transport of animal by-products that comprises:
- a container configured to store the animal by-products, and
- a chassis configured to support and reinforce the container, preferably preventing its deformation; and
- cooling means configured to cool the animal by-products stored in the container.

Optionally, the system comprises insulation means to prevent the transmission of temperature from the outside to the inside.

Optionally, the system comprises removal service means for removal from the livestock farm, meat industry or SANDACH production centre to a suitable authorised centre for the correct treatment and use thereof to promote the circular economy and reduce greenhouse gas emissions.

Thus configured, the system preserves the health and hygiene of the livestock farm where it is installed, avoids unpleasant odours and unwanted insects, minimises environmental pollution caused by these types of by-products, and, by reducing the frequency of collection, guarantees the biosafety of the farm and reduces greenhouse gas emissions.

Optionally, the cooling means are detachable from the container, allowing them to be removed when the system has to be moved for the subsequent emptying, treatment and use of animal by-products, thus promoting the circular economy.

Optionally, the container further comprises a gate that can be attached to the container and configured to close the container once the cooling means have been detached. In this way, it is possible to transport the system in an airtight manner, preventing the leakage of animal by-product residue during transport.

The system thus combines regulated cooling technology with or without insulation to keep the inner material intact and to slow down degradation. This thus preserves the health and hygiene of the livestock farm and avoids unpleasant odours and unwanted insects, maximising biosafety and minimising environmental pollution caused by these types of materials.

It drastically reduces the frequency of the visits made to remove this material from livestock farms, meat industries and SANDACH production centres, promoting biosafety and reducing emissions generated by the vehicles used for this removal.

Exposure and the spread of potential health problems caused by the previous removal of these materials on other farms is reduced, thus promoting biosafety.

Optionally, the system comprises a photovoltaic panel configured to allow the autonomous operation of the cooling means.

Optionally, the container comprises a bottom, a perimeter wall and a top lid, wherein said top lid preferably comprises at least one movable part.

Optionally, the system comprises an opening and closing system for the movable part of the top lid, wherein said opening and closing system is connected to the movable part of the top lid and comprises an opening and closing handle configured to come in contact with the perimeter wall of the container in an open position of the movable part of the top lid, which allows an operator to perform said opening and closing of the top lid of the container with only one hand, thus saving time and simplifying the operator's daily opening and closing action.

Optionally, the top lid comprises a sliding hinge that connects the movable part of the top lid in a hinged manner to the container, thus increasing the efficiency of the opening and closing system, preventing breakage and friction, and increasing its longevity, further facilitating its permanent opening and closing, due to the fact that the stresses are distributed along the entire length of the sliding hinge.

Optionally, the top lid further comprises a fixed part. Preferably, the movable part of the top lid is connected in a hinged manner via the sliding hinge to the fixed part of the top lid of the container.

Preferably, the container is cylindrical and the top lid is circular.

Preferably, the bottom of the container comprises several transversal and longitudinal ribs that strengthen it, preventing breakage and possible leakage of decomposing liquids, increasing biosafety and the useful life of the container.

Preferably, the movable part comprises a larger surface than the fixed part. In the case that the container is cylindrical and the top lid is circular, the sliding hinge has a length and is arranged on a circumferential chord separating the movable part from the fixed part.

Optionally, the opening and closing system for the movable part of the top lid further comprises side arms that connect the opening and closing handle to the movable part of the top lid. Preferably, the side arms in turn comprise first cantilevered plates emerging from the movable part of the top lid and second plates adjacent to the movable part of the top lid and extending along part of the surface of said movable part. In this way, the opening and closing system for the movable part of the top lid thus configured is counterbalanced, facilitating its opening and closing so that the movable part of the top lid reaches the open position.

Optionally, the chassis is a hinged chassis, which allows it to be folded for transport or storage.

Optionally, the chassis comprises a set of removably attachable bars for easy repair, so that it is not necessary to replace the entire chassis in the event of a failure or breakage of one of the bars.

Optionally, the container is white in colour, since this colour reflects the wavelengths of light and does not absorb them in the form of heat, promoting the preservation of the inner material in a cool and optimal state.

Optionally, the container is made of high-density polyethylene, which reduces the risk of breakage and/or cracks due to impacts caused by the operator's machinery when dumping animal carcasses, as it is harder than other materials such as polyester or fibreglass, and it reduces the wear and deterioration of the material due to meteorological and corrosive phenomena, as it is permanently watertight. Preferably, the container is 20 mm thick, increasing its rigidity and therefore its safety.

Optionally, the height of the perimeter wall of the container is less than a representative dimension, preferably the diameter in the case of the cylindrical container, of the bottom of the container, which makes it highly stable for transport, handling and subsequent dumping at a destination.

The system for storage, preservation and transport of animal by-products of the present invention makes it possible to carry out a protocol and measures for the temporary collection of organic waste generated at livestock farms and meat industries generating SANDACH material (animal by-products not intended for human consumption and the products derived from them), for its correct management with the aim of minimising harmful exposure to the environment and the transmission of health problems at any point in the chain from said generation, temporary retention *in situ,* removal and transport to authorised managers for the correct treatment and use for the circular economy and finally the return of these environmental technologies to the farm to restart the process.

This protocol is defined in different stages:
1. The system is delivered empty and with the health guarantees of disinfection and it is installed on the client's farm, in accordance with the client's required specifications regarding the available technology options offered. The corresponding configurations are carried out for the turnkey commissioning of the installed environmental technology.
2. The livestock farm, meat industry and/or SANDACH production centre loads organic waste generated without handling prior to dumping, taking advantage of the simplicity and safety offered by the system.
3. The farm carries out the notification process for removal once said system(s) is/are full. No advance notice should be given since this technology maximises preservation and minimises the risk of health problems. Moreover, the material loaded at the start of the process will not be in an advanced state of decomposition nor will it emit unpleasant odours until it is filled.
4. Removal and transport of the system is carried, maximising biosafety.
5. Unloading at the authorised management company is carried out with all safety and hygiene measures for the protection of personnel, equipment and the system.
6. The cleaning and disinfection process of the system is carried out in accordance with established standards.
7. After completing the previous point, an inspection is carried out to check the cleanliness and state of the system in order to detect possible failures or incidents. If a failure is found, the necessary measures will be taken to resolve it in terms of quality and time.
8. Finally, the system is returned from the organic waste management company to the client's farm with the guarantee that both the system and the vehicle have passed the cleaning and disinfection inspections.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:

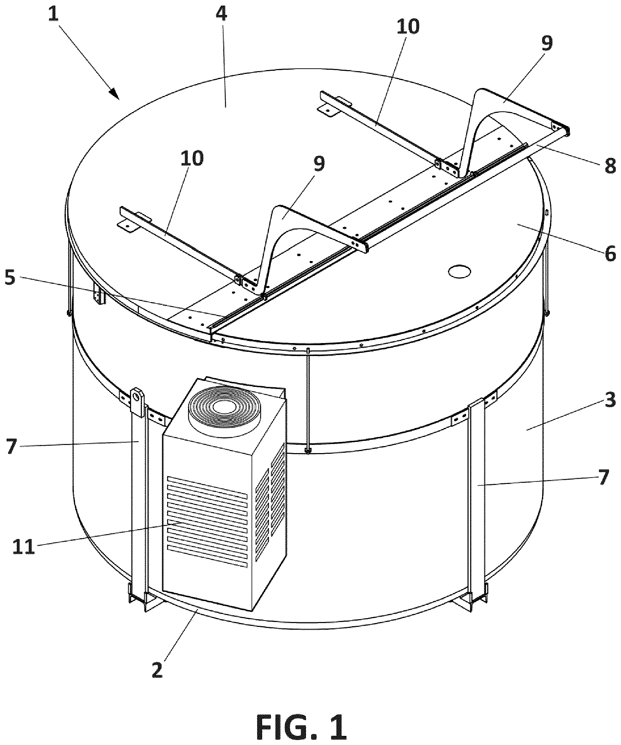

Figure 1 shows a perspective view of the system for storage, preservation and transport of animal by-products, showing the cooling means at the front.

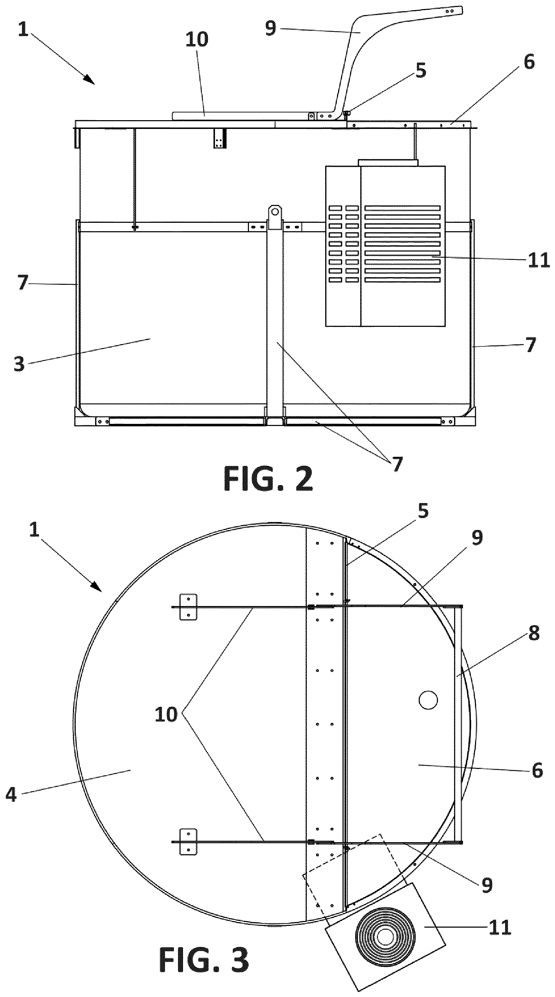

Figure 2 shows an elevation view of Figure 1.
Figure 3 shows a plan view of Figure 1.

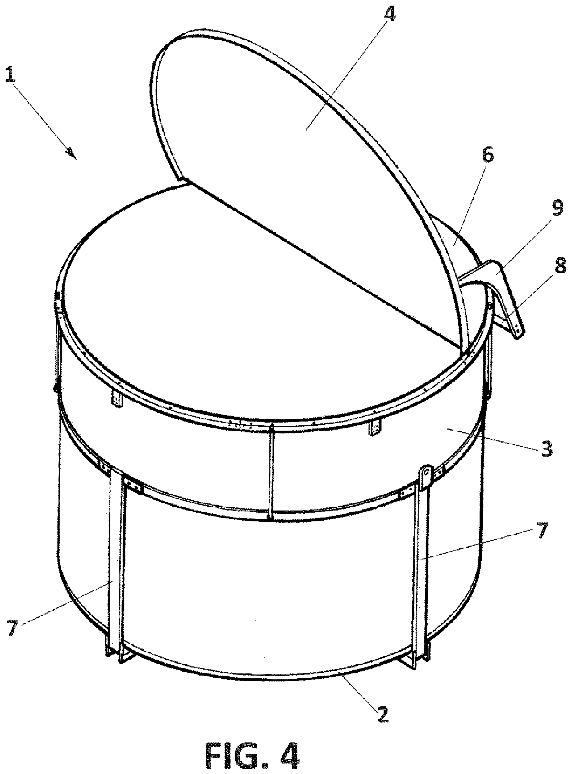

Figure 4 shows a perspective view of the system for storage, preservation and transport of animal by-products in an open position of the movable part of the top lid where the cooling means are not shown.

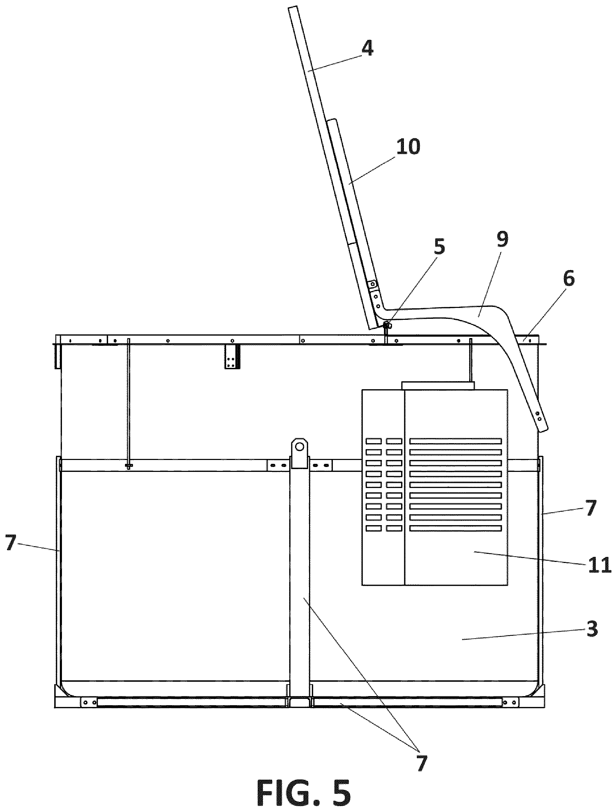

Figure 5 shows an elevation view of Figure 4 where the cooling means are shown.

### PREFERRED EMBODIMENT OF THE INVENTION

The present invention will be described in detail below, wherein the system for storage, preservation and transport of animal by-products comprises:
- a container (1) configured to store the animal by-products,
- a chassis (7) configured to support and reinforce the container (1); and
- cooling means (11) configured to cool the animal by-products stored in the container (1), wherein the cooling means (11) are preferably detachable from the container (1).

Preferably, the container (1) further comprises a gate that can be attached to the container (1) and configured to close the container (1) once the cooling means (11) have been detached.

The container (1) comprises a bottom (2), a perimeter wall (3) and a top lid, wherein said top lid comprises at least one movable part (4).

The system further comprises an opening and closing system for the movable part (4) of the top lid, wherein said opening and closing system is connected to the movable part (4) of the top lid and comprises an opening and closing handle (8) configured to come in contact with the perimeter wall (3) of the container (1) in an open position of the movable part (4) of the top lid.

The top lid comprises a sliding hinge (5) that connects the movable part (4) of the top lid in a hinged manner to a fixed part (6) of the top lid.

The container (1) is cylindrical and the top lid is circular, wherein the movable part (4) comprises a larger surface than the fixed part (6), wherein preferably the movable part (4) comprises less than 70% of the surface of the top lid and the fixed part (6) comprises more than 30% of the surface of the top lid, wherein the sliding hinge (5) is linear and separates the surface of the movable part (4) from the surface of the fixed part (6).

Optionally, the opening and closing system for the movable part (4) of the top lid further comprises side arms that connect the opening and closing handle (8) to the movable part (4) of the top lid, wherein the side arms comprise first cantilevered plates (9) emerging from the movable part (4) of the top lid and second plates (10) adjacent to the movable part (4) of the top lid and extending along part of the surface of said movable part (4) and connected to the first plates (9). Preferably, the first plates (9) are connected to the opening and closing handle (8) at the end opposite to the end where they are connected to the second plates (10). Preferably, the first plates (9) have a first section essentially perpendicular to the movable part (4) and a second section essentially parallel to the movable part (4).

## Claims

1. A system for storage, preservation and transport of animal by-products that comprises:
- a container (1) configured to store the animal by-products, and
- a chassis (7) configured to support and reinforce the container (1); and
**characterised in that** it further comprises cooling means (11) configured to cool the animal by-products stored in the container (1).

2. The system for storage, preservation and transport of animal by-products according to claim 1, **characterised in that** the cooling means (11) are detachable from the container (1).

3. The system for storage, preservation and transport of animal by-products according to claim 2, **characterised in that** the container (1) further comprises a gate that can be attached to the container (1) and configured to close the container (1) once the cooling means (11) have been detached.

4. The system for storage, preservation and transport of animal by-products according to any of the preceding claims, **characterised in that** the container (1) comprises a bottom (2), a perimeter wall (3) and a top lid, wherein said top lid comprises at least one movable part (4) and the system further comprises an opening and closing system for the movable part (4) of the top lid, wherein said opening and closing system is connected to the movable part (4) of the top lid and comprises an opening and closing handle (8) configured to come in contact with the perimeter wall (3) of the container (1) in an open position of the movable part (4) of the top lid.

5. The system for storage, preservation and transport of animal by-products according to claim 4, **characterised in that** the top lid comprises a sliding hinge (5) that connects the movable part (4) of the top lid in a hinged manner to the container (1).

6. The system for storage, preservation and transport of animal by-products according to claim 5, **characterised in that** the top lid further comprises a fixed part (6).

7. The system for storage, preservation and transport of animal by-products according to claim 6, **characterised in that** the movable part (4) of the top lid is connected in a hinged manner via the sliding hinge (5) to the fixed part (6) of the top lid of the container (1).

8. The system for storage, preservation and transport of animal by-products according to claim 4, **characterised in that** the container (1) is cylindrical and the top lid is circular.

9. The system for storage, preservation and transport of animal by-products according to claim 4, **characterised in that** the movable part (4) of the top lid comprises a larger surface than the fixed part (6).

10. The system for storage, preservation and transport of animal by-products according to claims 8 and 9, **characterised in that** the sliding hinge (5) has a length and is arranged on a circumferential chord separating the movable part (4) from the fixed part (6) of the top lid.

11. The system for storage, preservation and transport of animal by-products according to claim 10, **characterised in that** the movable part (4) comprises less than 70% of the surface of the top lid and the fixed part (6) comprises more than 30% of the surface of the top lid, wherein the sliding hinge (5) is linear and separates the surface of the movable part (4) from the surface of the fixed part (6).

12. The system for storage, preservation and transport of animal by-products according to claim 4, **characterised in that** the opening and closing system for the movable part (4) of the top lid further comprises side arms that connect the opening and closing handle (8) to the movable part (4) of the top lid.

13. The system for storage, preservation and transport of animal by-products according to claim 12, **characterised in that** the side arms comprise first cantilevered plates (9) emerging from the movable part (4) of the top lid and second plates (10) adjacent to the movable part (4) of the top lid and extending along part of the surface of said movable part (4).

14. The system for storage, preservation and transport of animal by-products according to claim 13, **characterised in that** the second plates (10) are connected to the first plates (9).

15. The system for storage, preservation and transport of animal by-products according to claim 14, **characterised in that** the first plates (9) are connected to the opening and closing handle (8) at the end opposite to the end where they are connected to the second plates (10).

16. The system for storage, preservation and transport of animal by-products according to any of claims 13 to 15, **characterised in that** the first plates (9) have a first section essentially perpendicular to the movable part (4) and a second section essentially parallel to the movable part (4).

17. The system for storage, preservation and transport of animal by-products according to any of the preceding claims, **characterised in that** the chassis (7) is a hinged chassis.

18. The system for storage, preservation and transport of animal by-products according to any of the preceding claims, **characterised in that** the chassis (7) comprises a set of removably attachable bars.

19. The system for storage, preservation and transport of animal by-products according to any of the preceding claims, **characterised in that** the container (1) is white in colour.

20. The system for storage, preservation and transport of animal by-products according to any of the preceding claims, **characterised in that** the container (1) is made of high-density polyethylene.

21. The system for storage, preservation and transport of animal by-products according to claim 8, **characterised in that** the height of the perimeter wall (3) of the container (1) is less than the diameter of the bottom (2) of the container (1).

22. The system for storage, preservation and transport of animal by-products according to any of the preceding claims, **characterised in that** it comprises a photovoltaic panel configured to allow the autonomous operation of the cooling means.
